# EUROPÄISCHE PATENTANMELDUNG

(11) **EP 4 036 496 A1**
(43) Veröffentlichungstag der Anmeldung: **03.08.2022**
(21) Anmeldenummer: 21216200.2
(22) Anmeldetag: 21.12.2021
(51) Int. Cl.: F25B 23/00

(54) **KÜHLSYSTEM FÜR ZWEIPHASIGES KÄLTEMITTEL**

(30) Priorität: 28.01.2021 DE 102021101975
(71) Anmelder: Airbus Operations GmbH, 21129 Hamburg (DE)
(72) Erfinder: Piesker, Markus, 21129 Hamburg (DE)
(74) Vertreter: Schornack, Oliver

(57) **Zusammenfassung**

Es wird Kühlsystem (10) mit einem zweiphasigen Kältemittel beschrieben, das einen Kondensator (110), einen Verdampfer (130) und eine Fördereinrichtung (120) umfasst. Flüssiges und gasförmiges Kältemittel aus dem Verdampfer (130) werden in einem Sammelbehälter (135) gesammelt, an den eine erste Ableitung (P21) und eine zweite Ableitung (P22) angeschlossen sind. Durch die erste Ableitung (P21) wird gasförmiges Kältemittel zu dem Kondensator (110) geführt, während flüssiges Kältemittel durch die zweite Ableitung (P22) zu einem stromabwärts des Kondensators (110) liegenden Teil des Kühlsystems (10) geleitet wird. Ferner ist ein entsprechendes Brennstoffzellenkühlsystem beschrieben, das eine Brennstoffzelle umfasst, die den Verdampfer (130) des Kühlsystems (10) bildet.

## Beschreibung

Die Erfindung betrifft ein Kühlsystem für ein zweiphasiges Kältemittel und ein zugehöriges Brennstoffzellenkühlsystem. Insbesondere betrifft die Erfindung ein Kühlsystem für ein zweiphasiges Kältemittel mit einem Sammelbehälter, der flüssiges und gasförmiges Kältemittel aus dem Verdampfer sammelt, sowie ein Brennstoffzellenkühlsystem, bei dem der Verdampfer des Kühlsystems eine Brennstoffzelle ist.

In der nachfolgenden Beschreibung und den beigefügten Ansprüchen wird unter einem "zweiphasigen Kältemittel" ein Medium (Fluid) bezeichnet, das beim Kältetransport oder Wärmetransport seinen Aggregatszustand ändert. In der Regel wird gasförmiges Kältemittel in einem Kondensator abgekühlt und geht dabei in den flüssigen Zustand über. Durch Wärmeaustausch mit einem zu kühlenden Gegenstand oder Medium kann das flüssige Kältemittel verdampfen und den zu kühlenden Gegenstand oder Medium abkühlen, indem es ihm die zur Verdampfung des Kältemittels notwendige Energie (Verdampfungsenthalpie) entzieht.

Die Verdampfungsenthalpie ist abhängig von dem eingesetzten Kältemittel, wobei das Kältemittel auf die Betriebsbedingungen des Kühlsystems ausgelegt sein kann, um einen unerwünschten Phasenwechsel (Aggregatszustandsänderung) in anderen Abschnitten des Kühlsystems als dem Kondensator und dem Verdampfer zu vermeiden. Hierfür werden oft zusätzliche Komponenten in das Kühlsystem integriert, wie zum Beispiel zusätzliche Fördereinrichtungen des gasförmigen Kältemittels stromabwärts des Verdampfers oder ein Überhitzer, um sämtliches Kältemittel stromabwärts des Verdampfers in den gasförmigen Zustand zu bringen. Ferner können auch die Betriebsbedingungen des Kühlsystems, wie zum Beispiel ein bestimmter Temperaturbereich im Verdampfer, zusätzlichen Steuerungsbedarf und entsprechende Steuerungskomponenten in dem Kühlsystem mit sich bringen. All diese Komponenten bedeuten jedoch zusätzliches Gewicht für das Kühlsystem, welches insbesondere im Flugzeugbau nachteilig ist.

Der Erfindung liegt die Aufgabe zugrunde, ein Kühlsystem und insbesondere ein Brennstoffzellenkühlsystem bereitzustellen, das einen einfachen Aufbau und ein geringes Gewicht aufweist.

Diese Aufgabe wird durch ein Kühlsystem mit den Merkmalen des Anspruchs 1 sowie ein Brennstoffzellenkühlsystem mit den Merkmalen des Anspruchs 10 gelöst.

Gemäß einem ersten Aspekt zum besseren Verständnis der vorliegenden Offenbarung umfasst ein Kühlsystem mit einem zweiphasigen Kältemittel einen Kondensator, der dazu eingerichtet ist, das zweiphasige Kältemittel zu kühlen und gasförmiges Kältemittel in flüssiges Kältemittel zu überführen, und einen Verdampfer, der dazu eingerichtet ist, das zweiphasige Kältemittel zu erwärmen, wobei zumindest ein Teil des Kältemittels zu gasförmigem Kältemittel verdampft. Der Kondensator kann mit einer Wärmesenke thermisch gekoppelt sein, beispielsweise kann der Kondensator von einem kalten Fluid (Gas oder Flüssigkeit) durchströmt werden, welches Wärme aufnimmt und das Kältemittel in dem Kondensator kühlt und dabei gasförmiges Kältemittel in den flüssigen Zustand überführt. Entsprechend dient der Verdampfer als Kältequelle für eine zu kühlende Einrichtung. Der Verdampfer kann Wärme der zu kühlenden Einrichtung aufnehmen und an das Kältemittel übertragen, wobei dieses dabei zumindest teilweise von dem flüssigen Zustand in den gasförmigen Zustand übergeht.

Das Kühlsystem umfasst ferner eine Fördereinrichtung, die dazu eingerichtet ist, das zweiphasige Kältemittel von dem Kondensator zu dem Verdampfer zu fördern, und eine Steuerung, die dazu eingerichtet ist, eine Fördermenge des zweiphasigen Kältemittels durch die Fördereinrichtung zu steuern. Durch die Fördereinrichtung und Steuerung kann die Wärmemenge, die durch das Kältemittel in dem Verdampfer aufgenommen werden kann, gesteuert werden. Beispielsweise kann die Menge des Kältemittels, das dem Verdampfer zugeführt wird, ebenso wie ein Druck des Kältemittels, mit dem das Kältemittel dem Verdampfer zugeführt wird, gesteuert werden. Der Verdampfer und/oder die zu kühlende Einrichtung können somit eine im Wesentlichen konstante Temperatur erlangen.

Zudem umfasst das Kühlsystem einen ersten Sammelbehälter, der dazu eingerichtet ist, das flüssige und gasförmige Kältemittel aus dem Verdampfer zu sammeln. An den ersten Sammelbehälter angeschlossen sind eine erste Ableitung, die den ersten Sammelbehälter mit einem stromaufwärts des Kondensators liegenden Teil des Kühlsystems fluidisch verbindet und die dazu eingerichtet ist, gasförmiges Kältemittel aus dem ersten Sammelbehälter abzuleiten, und eine zweite Ableitung, die den ersten Sammelbehälter mit einem stromabwärts des Kondensators liegenden Teil des Kühlsystems fluidisch verbindet und die dazu eingerichtet ist, flüssiges Kältemittel aus dem ersten Sammelbehälter abzuleiten.

Der erste Sammelbehälter dient daher der Trennung von gasförmigem und flüssigem Kältemittel, welches den Verdampfer verlässt. Beispielsweise kann der Sammelbehälter zwei getrennte Anschlüsse oder Öffnungen aufweisen, an denen die erste bzw. zweite Ableitung angeschlossen sind. Zum Beispiel kann ein erster Anschluss für die erste Ableitung in einem Bereich des Sammelbehälters vorgesehen sein, die im eingebauten Zustand des Sammelbehälters bzw. gesamten Kühlsystems oben liegt, während der zweite Anschluss für die zweite Ableitung in einem unteren Bereich des eingebauten Sammelbehälters liegt. Dadurch kann aufgrund der Schwerkraft flüssiges von gasförmigem Kältemittel getrennt werden.

Durch die Trennung des Kältemittels kann der Kondensator effizienter arbeiten und kleiner dimensioniert werden, da ihm ausschließlich gasförmiges Kältemittel zugeführt wird. Gleichermaßen wird das flüssige Kältemittel an dem Kondensator vorbeigeführt und dem Kühlsystem stromabwärts des Kondensators, also in einem Bereich, in dem Kältemittel in flüssigem Aggregatszustand vorliegt, wieder zugeführt. Das Kühlsystem kann daher im Bereich zwischen Verdampfer und Kondensator weniger Komponenten als üblich (z.B. keine zusätzliche Fördereinrichtung) umfassen und somit weniger Gewicht haben und leichter ausgestaltet sein. Zudem kann ein Durchmesser der zweiten Ableitung geringgehalten werden, da ein kontinuierlicher Fluss flüssigen Kältemittels erfolgen kann. Ferner muss lediglich überschüssiges flüssiges Kältemittel von der Ausgangsseite des Verdampfers zurückgeführt werden. Insgesamt lässt sich dadurch das Gewicht des Kühlsystems deutlich reduzieren.

Gemäß einem zweiten Aspekt zum besseren Verständnis der vorliegenden Offenbarung umfasst ein Brennstoffzellenkühlsystem eine Brennstoffzelle und ein Kühlsystem gemäß dem ersten Aspekt. Mit anderen Worten wird das Kühlsystem des ersten Aspekts zur Kühlung einer Brennstoffzelle verwendet. Insbesondere ist der Verdampfer des Kühlsystems die Brennstoffzelle oder ein Abschnitt der Brennstoffzelle, durch den mittels Kühlung die thermischen Betriebsbedingungen der Brennstoffzelle aufrechterhalten werden können.

Für gewöhnlich werden Brennstoffzellen mittels flüssigen Kälteträgers, beispielsweise einem wasserbasierten Kälteträger, gekühlt. Dies hat den Hintergrund, dass möglichst jeder Abschnitt des Brennstoffzellenstapels gleichmäßig gekühlt werden muss. Andernfalls könnten Abschnitte des Brennstoffzellenstapels bei schlechter oder um gleichmäßiger Kühlung zu stark erhitzen, wodurch die Brennstoffzelle nicht effizient arbeitet oder sogar in dem betroffenen Abschnitt zerstört wird. Ein flüssiger Kälteträger ermöglicht eine gleichmäßige Wärmeaufnahme aller Abschnitte der Brennstoffzelle.

In der vorliegenden Offenbarung wird jedoch zur Gewichtsreduzierung des Kühlsystems möglichst auf einen flüssigen Kälteträger verzichtet. Daher wird ein zweiphasiges Kältemittel eingesetzt, wobei das Kältemittel in dem Verdampfer, hier der Brennstoffzelle, zumindest teilweise in den gasförmigen Aggregatszustand übergeht. Das Kühlsystem wird dadurch insgesamt leichter gegenüber einem System mit ausschließlich flüssigem Kälteträger. Zum Beispiel muss das Kühlsystem lediglich in dem Bereich zwischen Ausgang des Kondensators und Eingang des Verdampfers für ausschließlich flüssiges Kältemittel konzipiert sein, während andere Abschnitte des Kühlsystems für gasförmiges Kältemittel ausgelegt sind. Gegenüber herkömmlichen rein flüssig betriebenen Kühlkreisläufen entfällt im Bereich von gasförmigem Kältemittel das Gewicht des flüssigen Kältemittels, und im Bereich von flüssigem Kältemittel können Kältemittelleitungen kleiner und damit leichter ausgestaltet sein, da insgesamt weniger flüssiges Kältemittel benötigt wird.

Alternativ kann es sich anstatt einer Brennstoffzelle auch um einen Elektrolyseur handeln, der mit zugeführter elektrischer Energie einen Stoff chemisch trennt, um so Energie chemisch zu speichern. Beispielsweise kann der Elektrolyseur Wasser in Wasserstoff und Sauerstoff mithilfe elektrischen Stroms trennen. Selbstverständlich kann ein Kühlsystem (ein Kühlkreislauf) auch eine Brennstoffzelle und einen Elektrolyseur als Verdampfer umfassen. Wenn beide elektrischen Systeme beispielsweise zeitlich nacheinander betrieben werden, kann dasselbe Kühlsystem zum Kühlen beider elektrischen Systeme verwendet werden.

Ebenfalls alternativ oder zusätzlich kann der Verdampfer durch eine Batterie, eine elektronische Komponente, einen elektrischen Motor und/oder ein Getriebe gebildet werden, die ebenfalls durch das beschriebene Kühlsystem gekühlt werden können.

Gemäß einem dritten Aspekt zum besseren Verständnis der vorliegenden Offenbarung umfasst ein Fluggerät ein Brennstoffzellenkühlsystem gemäß dem zweiten Aspekt. Das Fluggerät kann ein Transportflugzeug, Passagierflugzeug, Leichtflugzeug oder ein Pseudosatellit (High Altitude Pseudo Satellite - HAPS) sein. Zum Beispiel kann das Fluggerät durch elektrischen Strom, der in der Brennstoffzelle erzeugt wird, angetrieben werden, oder bestimmte elektrische Komponenten in dem Fluggerät können durch den so erzeugten Strom betrieben werden. Alternativ oder zusätzlich kann das Fluggerät auch einen Elektrolyseur umfassen, der durch das Kühlsystem gekühlt wird. Jegliche Gewichtsersparnis kommt bei einem Fluggerät stark zum Tragen, da weniger Energie für den Antrieb benötigt wird.

Mit Bezug auf den zweiten und dritten Aspekt benötigen Brennstoffzellen und Elektrolyseure relativ konstante Betriebsparameter, insbesondere eine möglichst konstante Betriebstemperatur. Zum Beispiel kann die Betriebstemperatur zwischen 70 °C und 90 °C oder zwischen 80 °C und 90 °C liegen. Um diesen relativ engen Temperaturbereich dauerhaft zu ermöglichen, kann gemäß einer Ausgestaltungsvariante die Steuerung des Kühlsystems ferner dazu eingerichtet sein, Betriebsbedingungen der Brennstoffzelle oder des Elektrolyseurs zu erfassen, einen Kühlbedarf der Brennstoffzelle oder des Elektrolyseurs auf Basis der Betriebsbedingungen zu ermitteln, und das Kühlsystem so zu betreiben, dass der Kühlbedarf der Brennstoffzelle bzw. des Elektrolyseurs gewährleistet ist.

Zum Beispiel kann die Steuerung so viel Kältemittel in den Verdampfer leiten, wie benötigt wird, um die Brennstoffzelle oder den Elektrolyseur in dem gewünschten Temperaturbereich zu halten. Hierfür kann die Steuerung einen Bedarf an elektrischer Energie, die durch die Brennstoffzelle erzeugt werden soll oder dem Elektrolyseur zur chemischen Spaltung zur Verfügung steht, ermitteln (beispielsweise anhand von angeschlossenen elektrischen Verbrauchern bzw. Stromerzeugungseinrichtungen, wie zum Beispiel Solarzellen). Die elektrische Energie steht in Relation zu der von der Brennstoffzelle bzw. dem Elektrolyseur erzeugten Wärmemenge. Diese Wärmemenge gilt es durch das Kühlsystem aufzunehmen und abzutransportieren.

In einer weiteren beispielhaften Ausgestaltungsvariante kann die Steuerung so viel Kältemittel dem Verdampfer des Kühlsystems zuführen, dass der Verdampfer im Nassverdampfungsverfahren betrieben wird. Mit anderen Worten wird mehr Kältemittel in den Verdampfer geleitet als durch die Wärmezufuhr von der Brennstoffzelle bzw. dem Elektrolyseur verdampft werden kann. Dieses Nassverdampfungsverfahren bedingt, dass in dem gesamten Verdampfer flüssiges Kältemittel vorhanden ist. Dies ermöglicht eine gleichmäßige Kühlwirkung entlang der Strömungsrichtung des Kältemittels und somit eine gleichmäßige Wärmeverteilung innerhalb des Verdampfers und innerhalb der Brennstoffzelle bzw. dem Elektrolyseur. Somit können Bereiche mit starker Wärmeentwicklung (sogenannte Hotspots) vermieden werden.

Lediglich beispielhaft kann mindestens 20 % mehr Kältemittel in den Verdampfer geleitet werden, als darin verdampft wird. Mit anderen Worten liegt in Strömungsrichtung des Kältemittels stromabwärts des Verdampfers 20 % des (ehemals flüssigen) Kältemittels (weiterhin) in flüssiger Form vor, während das übrige Kältemittel in dem Verdampfer in den gasförmigen Aggregatszustand übergegangen ist.

Für gewöhnlich weisen eine Brennstoffzelle und ein Elektrolyseur Kanäle auf, durch die ein Kälteträger geführt wird, um diese zu kühlen. Gemäß den vorliegenden Aspekten bilden die Brennstoffzelle bzw. der Elektrolyseur den Verdampfer. Zum Beispiel können die bereits vorhandenen Kühlträger-Kanäle von dem Kältemittel des Kühlsystems durchströmt werden und somit den Verdampfer bilden. Dadurch können bestehende Brennstoffzellen bzw. Elektrolyseure mit dem hier beschriebenen Kühlsystem verwendet werden.

Nachfolgend werden weitere Ausgestaltungsvarianten des Kühlsystems unabhängig der beschriebenen Aspekte der vorliegenden Offenbarung erläutert.

Zum Beispiel kann in einer Ausgestaltungsvariante das Kühlsystem ein erstes Regelventil umfassen, das in der ersten Ableitung angeordnet ist und dazu eingerichtet ist, eine Durchflussmenge des gasförmigen Kältemittels durch die erste Ableitung zu regeln. Die Durchflussmenge des gasförmigen Kältemittels durch die erste Ableitung bestimmt auch den Druck, der in dem ersten Sammelbehälter und somit auch in dem Verdampfer herrscht. Durch die Ausdehnung des Kältemittels in dem Verdampfer durch den Übergang in den gasförmigen Aggregatszustand und/oder die Erwärmung des Kältemittels in dem Verdampfer weist das Kältemittel einen höheren Druck auf, wenn es den Verdampfer verlässt als bei dessen Eintritt in den Verdampfer. Durch Absperren des ersten Regelventils kann die Menge gasförmigen Kältemittels, die stromabwärts des Verdampfers abfließen kann, bestimmt werden und somit auch der dort vorherrschende Druck geregelt werden.

Beispielsweise kann die Steuerung ferner dazu eingerichtet sein, das erste Regelventil so zu steuern, dass das Kältemittel in dem ersten Sammelbehälter einen höheren Druck aufweist als das Kältemittel in dem stromabwärts des Kondensators liegenden Teil des Kühlsystems (Ausgangsseite des Kondensators). Der Druck in dem stromabwärts des Kondensators liegenden Teil des Kühlsystems wird maßgeblich durch die Kühlung und Kondensation des Kältemittels in dem Kondensator bestimmt. Umgekehrt zu dem zunehmenden Druck in dem Verdampfer, fällt der Druck an der Ausgangsseite des Kondensators geringer aus als an dessen Eingangsseite.

Die Druckdifferenz zwischen erstem Sammelbehälter und Ausgangsseite des Kondensators kann verwendet werden, um das flüssige Kältemittel durch die zweite Ableitung von dem ersten Sammelbehälter zu dem stromabwärts des Kondensators liegenden Teil des Kühlsystems zu bewegen. Mit anderen Worten wird der Druck des Kältemittels in dem ersten Sammelbehälter dafür verwendet, das flüssige Kältemittel aus dem ersten Sammelbehälter herauszudrücken. Hierfür muss das gasförmige Kältemittel ausreichend Energie aufweisen, um das flüssige Kältemittel zur Ausgangsseite des Kondensators zu befördern, und optional, um noch eigenständig bis zur Eingangsseite des Kondensators zu strömen.

Dadurch ist keine gesonderte Fördereinrichtung für das gasförmige und flüssige Kältemittel von dem Verdampfer zu dem Kondensator bzw. dem stromabwärts des Kondensators liegenden Teil des Kühlsystems notwendig, wie dies oft bei herkömmlichen Kühlsystemen eingesetzt wird. Ferner kann das flüssige Kältemittel auch entgegen der Gravitationskraft von dem ersten Sammelbehälter zu der Ausgangsseite des Kondensators bewegt werden, sodass das Kühlsystem in seinem Aufbau einfacher gestaltet sein kann und/oder den räumlichen Rahmenbedingungen angepasst werden kann, ohne dass ein natürliches Gefälle in der zweiten Ableitung vorgesehen werden muss. Die Förderung des flüssigen Kältemittels kann somit ausschließlich durch die Steuerung und das erste Regelventil erfolgen.

Alternativ oder zusätzlich kann in einer weiteren Ausgestaltungsvariante zumindest ein Abschnitt der ersten Ableitung einen festen Strömungswiderstand aufweisen, der so vorgegebenen ist, dass das Kältemittel in dem ersten Sammelbehälter einen höheren Druck aufweist als das Kältemittel in dem stromabwärts des Kondensators liegenden Teil des Kühlsystems. Mit anderen Worten wird anstatt oder zusätzlich zu dem ersten Regelventil die Durchflussmenge des gasförmigen Kältemittels von dem ersten Sammelbehälter zu dem Kondensator durch die erste Ableitung selbst beschränkt, sodass sich in dem ersten Sammelbehälter ein Druck aufbaut. Durch die nun vorliegende Druckdifferenz zwischen dem ersten Sammelbehälter und der Ausgangsseite des Kondensators lässt sich das flüssige Kältemittel von dem ersten Sammelbehälter zu der Ausgangsseite des Kondensators ohne zusätzliche Einrichtungen und/oder ohne Zuhilfenahme der Gravitation befördern.

Zum Beispiel kann die erste Ableitung einen Abschnitt aufweisen, der einen geringeren Durchmesser als andere Leitungen des Kühlsystems, bestimmte strömungshemmende Einbauten und/oder eine in Strömungsrichtung kurze Verengung des Strömungsquerschnitts aufweist. Dadurch kann Gewicht eingespart werden, insbesondere da kein erstes Regelventil notwendig ist. Zudem kann der Steuerungsaufwand reduziert werden. Die Druckdifferenz zwischen erstem Sammelbehälter und Ausgangsseite des Kondensators kann in diesem Fall ausschließlich über die Fördereinrichtung und die geförderte Menge Kältemittel in den Verdampfer gesteuert werden. Insbesondere in Kühlsystemen mit einer gleichmäßigen Wärmeerzeugung durch die mit dem Verdampfer zu kühlende Einrichtung ist ein konstanter Betrieb des Kühlsystems auch ohne erstes Regelventil möglich.

Ferner kann durch das erste Regelventil oder den bestimmten Abschnitt der ersten Ableitung neben dem Druck auch die Temperatur des Kältemittels geregelt oder bestimmt werden. Dadurch kann die Temperatur des Kältemittels für die Kondensation in dem Kondensator, aber auch für das Verdampfen in dem Verdampfer optimiert werden. Zum Beispiel kann abhängig von einer Temperatur der Wärmesenke für den Kondensator (zum Beispiel kalter Luftstrom) die Temperatur und der Druck des Kältemittels stromabwärts des Verdampfers gesteuert werden. Dabei können eine optimale Temperatur und ein optimaler Druck des Kältemittels in dem Verdampfer bewirkt werden. Zudem können auch eine optimale Temperatur und ein optimaler Druck des Kältemittels in dem Kondensator bewirkt werden.

Optional lässt sich durch das erste Regelventil der Druck in der ersten Ableitung reduzieren, wodurch ein Überhitzen des gasförmigen Kältemittels in der ersten Ableitung bewirkt wird. Ein Überhitzen bedeutet hier, dass das gasförmige Kältemittel beim Durchströmen der ersten Ableitung vor Erreichen des Kondensators nicht kondensiert.

Alternativ oder zusätzlich kann das Kältemittel in der ersten Ableitung auch durch Zuführen von Wärmeenergie erhitzt werden. Hierfür kann jede zur Verfügung stehende beliebige Wärmequelle verwendet werden. Zum Beispiel kann das Kältemittel zwischen 5 K und 15 K, vorzugsweise um 10 K, oberhalb der Sidetemperatur (des Taupunkts) erwärmt werden, um ein ausreichendes Überhitzen des Kältemittels zu erzielen.

Ferner kann das erste Regelventil ein elektrisches Ventil sein, das stufenlos, zum Beispiel durch die Steuerung, den Durchfluss durch die erste Ableitung regeln kann.

In einer anderen Ausgestaltungsvariante kann das Kühlsystem ferner einen zweiten Sammelbehälter umfassen, der dazu eingerichtet ist, das flüssige Kältemittel aus dem Kondensator zu sammeln. Mit anderen Worten ist der zweite Sammelbehälter stromabwärts des Kondensators mit diesem fluidisch verbunden, sodass in dem Kondensator kondensiertes (nun flüssiges) Kältemittel in den zweiten Sammelbehälter strömt. Der zweite Sammelbehälter dient als Reservoir flüssigen Kältemittels für die Fördereinrichtung, sodass gasförmiges Kältemittel die Fördereinrichtung nicht erreicht, wodurch Schäden an der Fördereinrichtung vermieden werden können.

Zum Beispiel kann die zweite Ableitung den ersten Sammelbehälter mit dem zweiten Sammelbehälter fluidisch verbinden. Die zentrale Aufgabe des zweiten Sammelbehälters ist die Bildung eines Reservoirs flüssigen Kältemittels für den Abschnitt des Kühlsystems bis zum Verdampfer. Daher kann flüssiges Kältemittel, welches in dem ersten Sammelbehälter vom gasförmigen Kältemittel getrennt wird, direkt in den zweiten Sammelbehälter geleitet werden. Die zweite Ableitung bildet somit einen Bypass des Kondensators.

In einer weiteren Ausgestaltungsvariante kann das Kühlsystem ferner eine Zuleitung umfassen, die die Fördereinrichtung mit dem Verdampfer fluidisch verbindet. Durch die Zuleitung wird dem Verdampfer flüssiges Kältemittel zugeführt.

Hierbei kann beispielsweise die Zuleitung einen festen Strömungswiderstand aufweisen, der die Durchflussmenge von flüssigem Kältemittel durch die Zuleitung in den Verdampfer bestimmt. Ebenso können auch strömungshemmende Einbauten in der Zuleitung und/oder eine Verengung des Strömungsquerschnitts vorhanden sein, um den festen Strömungswiderstand in der Zuleitung zu definieren.

Alternativ oder zusätzlich kann das Kühlsystem ein zweites Regelventil umfassen, das in der Zuleitung angeordnet ist und dazu eingerichtet ist, eine Durchflussmenge des Kältemittels durch die Zuleitung zu regeln. Das zweite Regelventil kann zum Beispiel den Durchlassquerschnitt der Zuleitung verschließen und (stufenlos) vollständig öffnen. Dadurch ist eine feinere Bestimmung der Kältemittelmenge in den Verdampfer möglich, bedingt jedoch das zusätzliche Gewicht für das zweite Regelventil. Auch kann die Wärmemenge, die in dem Verdampfer aufgenommen und abtransportiert werden kann, schneller und genauer eingestellt werden, beispielsweise an den aktuellen Bedarf angepasst werden.

Ferner kann optional die Steuerung dazu eingerichtet sein, das zweite Regelventil so zu steuern, dass der Verdampfer mit der optimalen Kältemittelmenge gefüllt wird. Die optimale Kältemittelmenge bestimmt sich anhand der Betriebsparameter der zu kühlenden Einrichtung (zum Beispiel Brennstoffzelle oder Elektrolyseur) und somit der abzuführenden Wärmemenge.

Zudem kann die Steuerung das zweite Regelventil so steuern, dass der Verdampfer im Nassverdampfungsverfahren betrieben wird. Mit anderen Worten wird durch das zweite Regelventil mehr flüssiges Kältemittel in den Verdampfer geleitet, als in dem Verdampfer verdampft, sodass flüssiges Kältemittel den Verdampfer auch wieder verlässt.

In einer bestimmten Ausgestaltungsvariante kann das zweite Regelventil an eine weitere Kältemittelleitung angeschlossen sein, die das zweite Regelventil mit dem zweiten Sammelbehälter fluidisch verbindet. Zum Beispiel kann das zweite Regelventil so implementiert sein, dass Kältemittel von der Fördereinrichtung zwischen 0 % und 100 % über die Zuleitung in den Verdampfer geleitet wird, während die entsprechend übrige bzw. gesamte Menge Kältemittel (zwischen 100% und 0%) von der Fördereinrichtung in den Sammelbehälter geleitet wird. Dadurch können unabhängig von der Geschwindigkeit der Änderung der Fördermenge der Fördereinrichtung die Kältemittelmenge bestimmt werden, die dem Verdampfer zugeleitet wird. Zudem kann die Fördereinrichtung auch konstanter betrieben werden, wodurch diese geschont wird. Insgesamt lässt sich dadurch die Gesamtmenge flüssigen Kältemittels in dem Kühlsystem verringern und die Größe des ersten und/oder zweiten Sammelbehälters optimieren und verringern. Dadurch lässt sich weiter Gewicht einsparen.

In einer weiteren Ausgestaltungsvariante kann das Kühlsystem ferner einen Vorheizwärmetauscher umfassen, der das Kältemittel in der Zuleitung zu dem Verdampfer erwärmt. Dies ist insbesondere vorteilhaft, wenn der Verdampfer oder die durch den Verdampfer zu kühlende Einrichtung sensibel auf Temperaturveränderungen reagiert. Mit anderen Worten soll versucht werden, dass Kältemittel möglichst mit konstanter Temperatur in den Verdampfer zu leiten. Aufgrund äußerer Umstände kann das Kältemittel in dem Kältesystem jedoch unterschiedlich stark gekühlt sein, bevor es zu dem Verdampfer kommt. Zum Beispiel sind Brennstoffzellen und Elektrolyseure sensibel gegenüber Temperaturveränderungen und weisen eine von ihrer Temperatur abhängige Effizienz auf. Auf der anderen Seite sind insbesondere Pseudosatelliten starken Temperaturschwankungen ausgesetzt. So kann nachts eine Abkühlung des Kältemittels nicht nur in dem Kondensator, sondern auch in den Leitungen des Kühlsystems erfolgen.

Ferner kann der Vorheizwärmetauscher beispielsweise das Kältemittel in der Zuleitung mit dem Kältemittel stromabwärts des Verdampfers thermisch koppeln.

Zum Beispiel kann der Vorheizwärmetauscher in dem Verdampfer, vorzugsweise an einem in Strömungsrichtung des Kältemittels betrachtet stromabwärts gelegenen Ausgang des Verdampfers, angeordnet sein. Dadurch kann in dem Verdampfer (bzw. der zu kühlenden Einrichtung) erzeugte Wärme direkt verwendet werden, um das flüssige Kältemittel in der Zuleitung zu erwärmen. Durch diese direkte thermische Kopplung kann eine im Wesentlichen konstante Temperatur des (flüssigen) Kältemittels im und am Verdampfer erzielt werden.

Alternativ oder zusätzlich kann der Vorheizwärmetauscher in dem ersten Sammelbehälter angeordnet sein. Dadurch wird eine thermische Kopplung zwischen Kältemittel in der Zuleitung und Kältemittel in dem ersten Sammelbehälter ermöglicht. Da das Kältemittel in dem ersten Sammelbehälter aus dem Verdampfer kommt und daher erwärmt ist, lässt es sich gut verwenden, um das Kältemittel in der Zuleitung zu erwärmen. Ferner können die Temperaturen des Kältemittels vor und nach dem Verdampfer angenähert oder angeglichen werden, sodass das Kältemittel in dem Verdampfer kontinuierlich eine konstante Temperatur aufweist. Der Kühleffekt in dem Verdampfer lässt sich dadurch nahezu ausschließlich aufgrund der Verdampfungsenthalpie des Kältemittels im Verdampfer erzielen. Ferner kann durch diese Anordnung des Vorheizwärmetauschers das gasförmiges Kältemittel in dem ersten Sammelbehälter (an dem darin angeordneten Vorheizwärmetauscher) bei der thermischen Kopplung mit dem flüssigen Kältemittel in der Zuleitung kondensieren und gesammelt werden.

Ebenfalls alternativ oder zusätzlich kann der Vorheizwärmetauscher (oder ein weiterer in Reihe geschalteter Vorheizwärmetauscher) das Kältemittel in der Zuleitung mit dem gasförmigen Kältemittel in der ersten Ableitung thermisch koppeln. Zum Beispiel kann der Vorheizwärmetauscher in einem Abschnitt der ersten Ableitung angeordnet sein, der stromaufwärts des Kondensators liegt. Dadurch kann der Kondensator geringer dimensioniert werden, da das gasförmige Kältemittel in der ersten Ableitung bereits Wärme an das flüssige Kältemittel in der Zuleitung abgibt. Ferner kann die Druckdifferenz zwischen dem Verdampfer und dem Kondensator erhöht werden, um den Rückfluss des Kältemittels von dem ersten Sammelbehälter zu dem Kondensator bzw. der Ausgangsseite des Kondensators zu verbessern.

Weiterhin alternativ oder zusätzlich kann der Vorheizwärmetauscher (oder ein weiterer in Reihe geschalteter Vorheizwärmetauscher) in dem zweiten Sammelbehälter angeordnet sein.

Ebenso ist es alternativ oder zusätzlich möglich, dass das Kältemittel in der Zuleitung durch eine Heizeinrichtung (elektrischer Heizer) oder eine andere wärmeabgebende Komponente erwärmt wird.

In noch einer weiteren Ausgestaltungsvariante kann das Kühlsystem ferner einen Unterkühler umfassen, der dazu eingerichtet ist, Kältemittel stromabwärts des Kondensators und stromaufwärts der Fördereinrichtung zu unterkühlen. Ein Unterkühlen des Kältemittels verhindert Kavitation in der Fördereinrichtung, da das Kältemittel weiter unterhalb seines Siedepunktes gekühlt ist. Zum Beispiel kann der Unterkühler die Temperatur des den Kondensator verlassenden Kältemittels um 2 bis 10 K, vorzugsweise um 5 K, (unterhalb der Ausgangstemperatur am Kondensator oder unterhalb des Siedepunktes) reduzieren.

Ferner kann der Unterkühler in den Kondensator integriert sein, einen Teil des Kondensators bilden oder ein Abschnitt des Kondensators sein. Dadurch können sich der Kondensator und der Unterkühler eine Wärmesenke (zum Beispiel ein kaltes Fluid, kalter Luftstrom, etc.) teilen. Alternativ kann der Unterkühler auch getrennt von dem Kondensator implementiert sein und eine eigene Wärmesenke aufweisen.

In einer anderen Ausgestaltungsvariante kann der erste Sammelbehälter Teil des Verdampfers sein, ein Abschnitt des Verdampfers sein oder in diesen integriert sein. Ferner kann der erste Sammelbehälter auch in Form einer Leitung, die ausgangsseitig an den Verdampfer angeschlossen ist, implementiert sein. Zum Beispiel kann die Leitung eine Aufweitung aufweisen, die als erster Sammelbehälter fungiert.

In einer weiteren Ausgestaltungsvariante kann das Kühlsystem mindestens einen Drucksensor und/oder Temperatursensor umfassen, der den Druck bzw. die Temperatur des Kältemittels an entsprechender Position in dem Kühlsystem misst. Die Steuerung kann auf die Signale oder Daten des mindestens einen Sensors zurückgreifen, um die Fördereinrichtung, das erste Regelventil und/oder das zweite Regelventil zu steuern.

Lediglich beispielhaft kann der mindestens eine Sensor in dem ersten Sammelbehälter und/oder in dem zweiten Sammelbehälter angeordnet sein. Dadurch kann der Druck und/oder die Temperatur stromabwärts des Verdampfers bzw. stromabwärts des Kondensators bestimmt werden. Ferner sind Brennstoffzellen oder Elektrolyseure bereits mit solchen Sensoren ausgestattet, die mit der Steuerung gekoppelt werden können, um den Druck und/oder die Temperatur des Kältemittels in dem Verdampfer zu bestimmen.

Bei bekanntem Volumen des ersten bzw. zweiten Sammelbehälters (oder des gesamten Kühlsystems) kann die Steuerung aufgrund der Sensorsignale oder -daten und unter Berücksichtigung der thermischen Gesetze das Volumen des flüssigen und/oder gasförmigen Kältemittels bestimmen. Insbesondere bei konstantem Betrieb des Kühlsystems und somit einer im wesentlichen homogenen Temperaturverteilung des Kältemittels innerhalb des Kühlsystems kann die gesamte (flüssige) Menge Kältemittel berechnet werden. Dadurch kann die Steuerung auch dazu eingerichtet sein, ein Leck oder einen Verlust von Kältemittel zu erkennen.

Alternativ oder zusätzlich können auch Füllstandssensoren in dem ersten und/oder dem zweiten Sammelbehälter vorgesehen sein, um die flüssige Kältemittelmenge zu bestimmen.

Ferner kann die Steuerung das Kühlsystem (bzw. seine Komponenten) so steuern, dass der Druck in dem Kühlsystem stromabwärts des Verdampfers ungefähr 3,2 bar beträgt und stromabwärts des Kondensators 2,4 bar beträgt. Die Druckdifferenz zwischen 3,2 und 2,4 bar reicht für gewöhnlich aus, das flüssige Kältemittel von dem ersten Sammelbehälter zu dem Abschnitt des Kühlsystems stromabwärts des Kondensators zu fördern. Ferner reicht diese Druckdifferenz, die auch zwischen dem ersten Sammelbehälter und einem Abschnitt des Kühlsystems stromaufwärts des Kondensators vorliegt, aus, um das Kältemittel nach Austreten aus dem Verdampfer, wo es einen gesättigten Dampf darstellt, in überhitzten Dampf zu wandeln.

In einer Ausgestaltungsvariante kann das Kältemittel R1336mzz(Z), R134a, Methanol oder CO2 (Kohlendioxid) sein. Selbstverständlich kann jedes andere zweiphasige Kältemittel verwendet werden. R1336mzz(Z) eignet sich jedoch insbesondere in einem Kühlsystem mit Brennstoffzelle oder Elektrolyseur als Verdampfer, wobei diese/dieser bei einer Temperatur von ca. 85 °C optimal betrieben werden, da R1336mzz(Z) bei einem Druck zwischen 2,4 und 3,2 bar und einer Temperatur zwischen 70° C und 90 °C verdampft. Dadurch lässt sich eine optimale Kühlung der Brennstoffzelle oder des Elektrolyseurs bei optimaler Betriebstemperatur erreichen. Zusätzlich ist R1336mzz(Z) elektrisch nichtleitend, sodass es in die Brennstoffzelle oder den Elektrolyseur eingeleitet werden kann.

In einer weiteren Ausgestaltungsvariante kann der Kondensator so betrieben werden (durch die Wärmesenke so gekühlt werden), dass die Druckdifferenz zum Druck des Kältemittels in dem ersten Sammelbehälter ausreicht, um das gasförmige sowie das flüssige Kältemittel zu dem Kondensator bzw. zu dem Abschnitt des Kühlsystems stromabwärts des Kondensators zu fördern. So kann eine Durchflussmenge des kühlenden Mediums der Wärmesenke so gesteuert werden, dass eine gewünschte Kondensatortemperatur und somit Temperaturverlauf des Kältemittels vom Eingang zum Ausgang des Kondensators erzielt wird.

Ferner kann die Steuerung das Kühlsystem (bzw. seine Komponenten) so steuern, dass die Temperatur des flüssigen Kältemittels im gesamten Kühlsystem im Wesentlichen gleich ist. Lediglich durch das Verdampfen des Kältemittels im Verdampfer ändert sich der Druck des Kältemittels stromabwärts des Verdampfers (insbesondere im ersten Sammelbehälter) und ändert sich wieder im Kondensator. Durch die homogene Temperaturverteilung werden Temperaturschwankungen im Verdampfer (bzw. der zu kühlenden Einrichtung) vermieden, wodurch dieser/diese schonender betrieben werden kann.

In noch einer weiteren Ausgestaltungsvariante kann das Kühlsystem ein drittes Regelventil umfassen, das in der zweiten Ableitung angeordnet ist und dazu eingerichtet ist, eine Durchflussmenge des flüssigen Kältemittels durch die zweite Ableitung zu regeln. Das dritte Regelventil ermöglicht neben der Regelung der Durchflussmenge (beispielsweise durch die Steuerung) auch eine Regelung des Drucks im ersten Sammelbehälter. Insbesondere in der Startphase des Kühlsystems kann dadurch ein höherer Druck im Verdampfer sowie im Kühlsystem ausgangsseitig des Verdampfers aufgebaut werden.

In einer anderen Ausgestaltungsvariante kann die erste Ableitung oder zumindest ein Abschnitt davon als doppelwandiges Rohr ausgestaltet sein. Dabei kann in einem innen liegenden Rohr der ersten Ableitung flüssiges Kältemittel führen, beispielsweise Kältemittel aus der Fördereinrichtung. Zum Beispiel kann das innenliegende Rohr der ersten Ableitung die Zuleitung von der Fördereinrichtung zu dem Verdampfer bilden. In dem außenliegenden Rohr der ersten Ableitung kann gasförmiges Kältemittel von dem Verdampfer bzw. dem ersten Sammelbehälter zu dem Kondensator geführt werden, also die erste Ableitung bilden. Dadurch wird das gasförmige Kältemittel in der ersten Ableitung durch das flüssige Kältemittel erwärmt, wodurch eine Kondensation in der ersten Ableitung verhindert wird.

Die oben beschriebenen Aspekte, Ausgestaltungen, Varianten und Beispiele können selbstverständlich kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

Bevorzugte Ausführungsbeispiele der Erfindung werden nun anhand der beigefügten schematischen Zeichnungen näher erläutert, wobei:
- Figur 1: schematisch eine erste Variante eines Kühlsystems zeigt;
- Figur 2: schematisch eine zweite Variante eines Kühlsystems zeigt;
- Figur 3: schematisch eine dritte Variante eines Kühlsystems zeigt; und
- Figur 4: schematisch eine vierte Variante eines Kühlsystems zeigt.

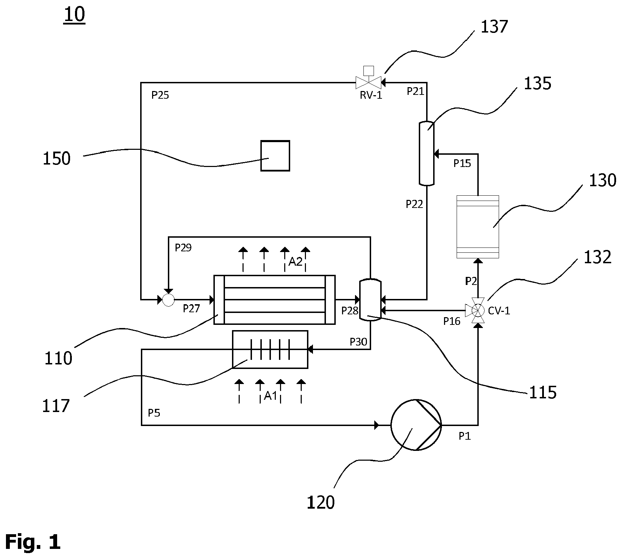

Figur 1 zeigt schematisch eine erste Variante eines Kühlsystems 10, das einen Kondensator 110, einen Verdampfer 130 und eine Fördereinrichtung 120 umfasst. Der Verdampfer 130 ist zum Beispiel über eine Zuleitung P1, P2 mit der Fördereinrichtung 120 verbunden, sodass ein Kältemittel des Kühlsystems 10 von der Fördereinrichtung 120 in den Verdampfer 130 geleitet werden kann. In dem Verdampfer 130 kann das Kältemittel, welches ein zweiphasiges Kältemittel ist, Wärmeenergie aufnehmen, wodurch zumindest ein Teil des Kältemittels verdampft. Im weiteren Verlauf des Kühlsystems 10, der noch näher beschrieben wird, strömt das Kältemittel zu dem Kondensator 110, in dem es gekühlt und kondensiert wird und anschließend in flüssigem Aggregatszustand der Fördereinrichtung 120 wieder zugeführt wird. Hierfür kann der Kondensator 110 mit einer Wärmesenke A2, beispielsweise in Form eines kalten Fluidstroms (Außenluft bei einem Fahrzeug), thermisch gekoppelt sein.

Stromabwärts des Verdampfers 130 (oder darin integriert oder daran angeschlossen) ist ein erster Sammelbehälter 135, der dazu eingerichtet ist, das flüssige und gasförmige Kältemittel aus dem Verdampfer 130 zu sammeln und zu trennen. Zum Beispiel kann der erste Sammelbehälter 135 über eine Leitung P15 mit einem Ausgang des Verdampfers 130 fluidisch verbunden sein.

Das Kühlsystem 10 weist eine erste Ableitung P21 auf, die den ersten Sammelbehälter 135 mit einem stromaufwärts des Kondensators 110 liegenden Teil des Kühlsystems 10 fluidisch verbindet. Dadurch kann gasförmiges Kältemittel aus dem ersten Sammelbehälter 135 abgeleitet werden und zur Kondensation in den Kondensator 110 geleitet werden. In der ersten Ableitung P21 kann ein erstes Regelventil 137 angeordnet sein, das dazu eingerichtet ist, eine Durchflussmenge des gasförmigen Kältemittels durch die erste Ableitung P21 zu regeln. Die erste Ableitung wird dabei durch die Leitungsabschnitte P21 und P25 gebildet. Durch das erste Regelventil 137 lässt sich ein Druck in dem ersten Sammelbehälter 135 steuern.

Alternativ kann ein Abschnitt der ersten Ableitung, zum Beispiel der Leitungsabschnitt P21 direkt nach dem ersten Sammelbehälter 135, einen festen Strömungswiderstand aufweisen. Der feste Strömungswiderstand kann dabei an das Gesamtsystem angepasst sein, um in dem ersten Sammelbehälter 135 einen höheren Druck aufzubauen als in dem stromabwärts des Kondensators 110 liegenden Teil des Kühlsystems 10. Dadurch kann auf das erste Regelventil 137 verzichtet werden.

Ferner weist das Kühlsystem 10 eine zweite Ableitung P22 auf, die den ersten Sammelbehälter 135 mit einem stromabwärts des Kondensators 110 liegenden Teil des Kühlsystems 10 fluidisch verbindet. Durch die zweite Ableitung P22 kann flüssiges Kältemittel aus dem ersten Sammelbehälter 135 abgeleitet werden und dem Kühlsystem in einem Bereich wieder zugeführt werden, der flüssiges Kältemittel führt, also stromabwärts des Kondensators 110. Von dort kann es wieder der Fördereinrichtung 120, zum Beispiel über die Leitungen P30 und P5 zugeführt werden. Das flüssige Kältemittel in der zweiten Ableitung P22 kann ausschließlich aufgrund einer Druckdifferenz zwischen dem ersten Sammelbehälter 135 und dem Abschnitt des Kühlsystems 10 stromabwärts des Kondensators 110 bewirkt werden. Eine zusätzliche Fördereinrichtung ist nicht notwendig. Optional kann ein Regelventil (nicht gezeigt) in die zweite Ableitung P22 integriert werden, um zum Beispiel die Druckdifferenz (den höheren Druck im ersten Sammelbehälter 135) und/oder einen Füllstand flüssigen Kältemittels in dem Verdampfer 130 schneller aufzubauen.

Figur 1 zeigt zudem einen zweiten Sammelbehälter 115, der dazu eingerichtet ist, das flüssige Kältemittel aus dem Kondensator 110 zu sammeln. Dabei kann die zweite Ableitung P22 den ersten Sammelbehälter 135 mit dem zweiten Sammelbehälter 115 fluidisch verbinden. Der zweite Sammelbehälter 135 kann auch in den Kondensator 110 integriert sein oder ein (aufgeweiteter) Abschnitt einer Kältemittelleitung P28, P30 stromabwärts des Kondensators 110 sein.

Für den Fall, dass sich in dem zweiten Sammelbehälter 135 gasförmiges Kältemittel akkumuliert, kann der zweite Sammelbehälter 135 über eine Rückleitung P29 mit einer Eingangsseite des Kondensators 110 fluidisch verbunden sein. Zum Beispiel kann die Rückleitung P29 in einen Leitungsabschnitt P27 des Kühlsystems stromaufwärts des Kondensators 110 münden. Um einen Bypass des Kondensators 110 zu vermeiden, kann am Ende der Rückleitung P29 ein Rückschlagventil vorgesehen sein.

Um zu verhindern, dass gasförmiges Kältemittel in die Fördereinrichtung 120 gelangt, kann in einem Abschnitt des Kühlsystems zwischen Kondensator 110 und Fördereinrichtung 120, beispielsweise zwischen zweitem Sammelbehälter 115 und Fördereinrichtung 120, ein Unterkühler 117 vorgesehen sein. Der Unterkühler 117 kann über eine eigene Wärmesenke A1 (Luftstrom oder anderes kaltes Fluid) als der Kondensator 110 verfügen. Alternativ können sich der Unterkühler 117 und der Kondensator 110 eine Wärmesenke teilen (nicht dargestellt) und/oder der Unterkühler 117 und der Kondensator 110 bilden eine Einheit (nicht gezeigt), sind also ineinander integriert.

Schließlich ist in Figur 1 noch ein zweites Regelventil 132 dargestellt, das in der Zuleitung P1, P2 angeordnet ist und dazu eingerichtet ist eine Durchflussmenge des Kältemittels durch die Zuleitung P2 zu regeln. Insbesondere kann das zweite Regelventil 132 die Kältemittelmenge bestimmen, die dem Verdampfer 130 zugeführt wird. Dadurch wird die Kühlleistung des Verdampfers 130 gesteuert, und somit auch der Druck im Verdampfer 130 sowie in den Abschnitten des Kühlsystems 10 stromabwärts des Verdampfers 130.

Optional kann das zweite Regelventil 132 auch einen Abzweig der Zuleitung P2 darstellen und zumindest einen Teil des von der Fördereinrichtung 120 durch die Leitung P1 geförderten Kältemittels über einen Leitungsabschnitt P16 wieder in einen Abschnitt des Kühlsystems 10 stromabwärts des Kondensators 110 leiten. Zum Beispiel kann der Leitungsabschnitt P16 in den zweiten Sammelbehälter 115 münden. Dadurch kann die Fördereinrichtung 120 kontinuierlich betrieben werden, während über das zweite Regelventil 132 der Zufluss in den Verdampfer 130 gesteuert wird.

Das Kühlsystem 10 verfügt ferner über eine Steuerung 150 (oder Steuereinheit, Prozessor oder Computer), die dazu eingerichtet ist, die Fördereinrichtung 120 und insbesondere deren Fördermenge flüssigen Kältemittels durch die Leitungen P5 und P1 zu steuern. Ferner kann die Steuerung 150 auch das Öffnen und Schließen sowie einen Öffnungsgrad der Regelventile 132, 137 bestimmen und steuern. Auch ist die Steuerung 150 dazu ausgelegt, den Betrieb des Kondensators 110 und/oder des Unterkühlers 117 zu regeln, beispielsweise durch Steuerung der Zufuhr kalten Fluids als Wärmesenke A1, A2.

Ferner kann das Kühlsystem 10 über Sensoren, insbesondere Drucksensoren und Temperatursensoren, verfügen (nicht dargestellt). Mittels der Sensoren kann die Steuerung 150 den Druck und/oder die Temperatur des Kältemittels an dem entsprechenden Abschnitt des Kühlsystems 10 ermitteln und die Fördereinrichtung 120 und/oder Regelventile 132, 137 und/oder Wärmesenken A1, A2 steuern. Die Steuerung 150 ist dabei insbesondere darauf ausgelegt, eine möglichst konstante Temperatur in dem Verdampfer 130 zu gewährleisten. Insbesondere wenn der Verdampfer 130 eine Brennstoffzelle oder einen Elektrolyseur (oder einen Teil davon) bildet, ist eine konstante Temperatur in der Brennstoffzelle/Elektrolyseur für deren Betrieb optimal. Zudem lässt sich durch die Steuerung 150 die Druckdifferenz zwischen erstem Sammelbehälter 135 und zweitem Sammelbehälter 115 aufbauen und halten, wodurch ein effizienter Betrieb des Kühlsystems 10 schnell und dauerhaft ermöglicht wird.

Lediglich beispielhaft kann die Steuerung 150 verschiedene Prozeduren durchführen, um das Kühlsystem 10 zu starten. So kann zum Beispiel das zweite Regelventil 132 so gesteuert sein, dass nur eine Verbindung zwischen Leitung P1 und Bypass P16 vorhanden ist, während das erste Regelventil 137 geöffnet ist. Nun wird die Wärmesenke A1 des Kondensators 110 in Betrieb genommen, um eine Kühlmitteltemperatur und -druck zum Betrieb des Verdampfers 130 (der Brennstoffzelle oder des Elektrolyseurs) zu ermöglichen. Liegt genügend flüssiges Kältemittel im Abschnitt stromabwärts des Kondensators 110, zum Beispiel in dem zweiten Sammelbehälter 115, vor, startet die Steuerung 150 die Fördereinrichtung 120.

Die Steuerung 150 kann dazu eingerichtet sein, den Kühlungsbedarf des Verdampfers 130 zu bestimmen. Zum Beispiel kann die Steuerung 150 mit Signalen oder Daten versorgt werden, die einen Betriebszustand der zu kühlenden Einrichtung widerspiegelt. Zum Beispiel kann anhand des verbrauchten oder erzeugten Stroms einer Brennstoffzelle bzw. eines Elektrolyseurs ermittelt werden, wie hoch der Kühlbedarf der Brennstoffzelle bzw. des Elektrolyseurs ist. Entsprechend kann die Steuerung das zweite Regelventil 132 so steuern, dass die notwendige Menge flüssigen Kältemittels durch die Leitung P2 in den Verdampfer 130 gelangt. Durch den nun ansteigenden Druck in dem ersten Sammelbehälter 135 kann die Steuerung 150 das erste Regelventil 137 (zumindest teilweise) schließen, um die oben beschriebene Druckdifferenz zwischen erstem und zweitem Sammelbehälter 135, 115 herzustellen.

Hierbei kann die Steuerung 150 den Druck in dem ersten Sammelbehälter 135 und somit in dem Verdampfer 130 auf ein Maximum begrenzen. Zum Beispiel sollte der Druck in einer Brennstoffzelle oder einem Elektrolyseur auf einen bestimmten Wert, beispielhaft 3,5 bar, begrenzt sein, um deren sicheren Betrieb zu gewährleisten. Durch das erste Regelventil 137 ist der Druck in dem Verdampfer 130, aber auch die Menge flüssigen Kältemittels in dem Verdampfer 130, steuerbar. Somit kann ein optimaler Betrieb der Brennstoffzelle oder des Elektrolyseurs gewährleistet werden.

Die Steuerung 150 kann ferner dazu eingerichtet sein, einen Füllstand flüssigen Kältemittels in dem Verdampfer 130 zu berechnen (mittels Druck- und Temperatursensoren) oder zu messen (mittels Füllstandsensor). Ist ein ausreichender Füllstand erreicht, kann die Steuerung 150 das zweite Regelventil 132 schließen und/oder die Fördermenge der Fördereinrichtung 120 reduzieren. Insbesondere kann die Steuerung 150 den Verdampfer 130 nun im Nassverdampfungsverfahren betreiben.

Ferner ist die Steuerung 150 dazu eingerichtet, den Betrieb des Kondensators 110 und/oder des Unterkühlers 117 zu regeln, um ausreichend flüssiges Kältemittel eingangsseitig (stromaufwärts) der Fördereinrichtung 120 bereitzustellen. Insbesondere die Wärmesenke A1 bzw. A2 kann hier durch die Steuerung 150 geregelt werden, um mehr oder weniger Kältemittel zu kondensieren (zu verflüssigen), und beispielsweise in dem zweiten Sammelbehälter 115 vorzuhalten.

Schließlich kann die Steuerung 150 verhindern, dass die Leitung P25 des Kühlsystems 10, die gasförmiges Kältemittel führt, mit flüssigem Kältemittel geflutet wird. Hierfür kann die Menge flüssigen Kältemittels in der Zuleitung P2 durch Schließen des zweiten Regelventils 132 gesteuert werden, beispielsweise in den Bypass P16 umgeleitet werden.

In einem weiteren beispielhaften Fall kann die Steuerung 150 auch dazu ausgelegt sein, die zu kühlende Einrichtung (wie zum Beispiel die Brennstoffzelle oder den Elektrolyseur) zu steuern. Dies ist zum Beispiel notwendig, wenn das Kühlsystem 10 keine ausreichende Kühlleistung in dem Verdampfer 130 erzielen kann. Im Fall einer Leckage des Kältemittels aus dem Kühlsystem 10 oder einer zu hohen Temperatur der Wärmesenke A1, A2 kann es notwendig sein, die Leistung der zu kühlenden Einrichtung und die damit einhergehende erzeugte Wärmemenge zu reduzieren. Insbesondere ist die Steuerung 150 dazu eingerichtet, die Betriebsparameter der zu kühlenden Einrichtung sowie des Kühlsystems 10 zu erfassen und im Vorfeld zu ermitteln, ob eine ausreichende Kühlung der zu kühlenden Einrichtung erfolgen kann oder ob die zu kühlende Einrichtung in ihrer Leistung (Wärmeerzeugung) reduziert werden muss. Hierbei kann die Steuerung 150 den maximal zulässigen Druck in dem Verdampfer 130 sowie minimale Füllstände in dem ersten und/oder zweiten Sammelbehälter 135, 115 sowie in dem Verdampfer 130 berücksichtigen.

Selbstverständlich kann die Steuerung 150 auch die zu kühlende Einrichtung sowie das gesamte Kühlsystem 10 abschalten, um Schäden an der zu kühlenden Einrichtung und/oder dem Kühlsystem 10 zu vermeiden. Hierbei kann die Steuerung 150 dazu eingerichtet sein, dass erste Regelventil 137 zu öffnen, um möglichst viel gasförmiges Kältemittel dem Kondensator 110 zuzuführen. Dadurch kann für einen späteren erneuten Start des Kühlsystems ausreichend flüssiges Kältemittel, zum Beispiel in dem zweiten Sammelbehälter 115, vorgehalten werden.

Für den Fall, dass das Kältemittel stromabwärts der Fördereinrichtung 120 zu kalt ist, um in den Verdampfer 130 geleitet zu werden (beispielsweise kann der Betrieb einer Brennstoffzelle oder eines Elektrolyseurs bei zu starker Kühlung behindert oder gestoppt werden), kann das Kältemittel in dem Leitungsabschnitt P1 oder P2 erwärmt werden. Im einfachsten Fall kann ein gesonderter Heizer (nicht dargestellt) vorgesehen sein, um die optimale Temperatur des Kältemittels für den Verdampfer 130 bereitzustellen.

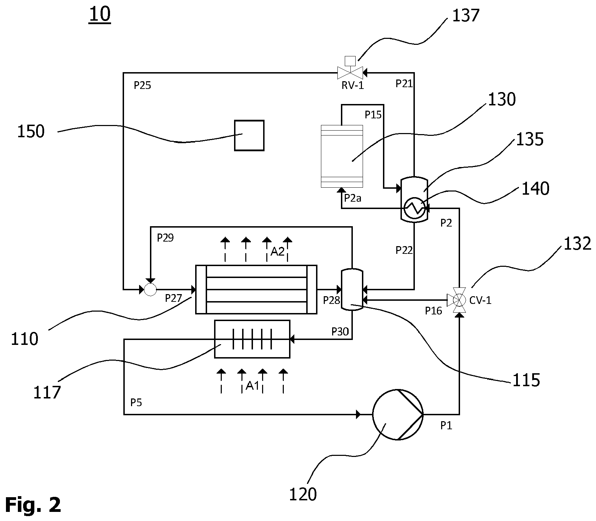

Eine andere Form der Erwärmung des Kältemittels stromabwärts der Fördereinrichtung 120 ist in Figur 2 dargestellt. Das gezeigte Kühlsystem 10 umfasst eine Vielzahl von Bauelementen, die auch in dem Kühlsystem 10 gemäß Figur 1 umfasst sind, weshalb deren Beschreibung hier nicht wiederholt wird.

In dem Kühlsystem 10 gemäß Figur 2 ist in der Zuleitung P2 ein Vorheizwärmetauscher 140 integriert, der das flüssige Kältemittel in der Zuleitung P2, P2a mit dem Kältemittel ausgangsseitig des Verdampfers 130 thermisch gekoppelt. Zum Beispiel kann, wie in Figur 2 dargestellt, der Wärmetauscher 140 in dem ersten Sammelbehälter 135 angeordnet sein, sodass er von dem Kältemittel in dem ersten Sammelbehälter 135 umströmt wird und von dem Kältemittel in der Zuleitung P2, P2a durchströmt wird und eine thermische Kopplung der beiden bewirkt. Dadurch wird die Temperatur des Kältemittels, welches in den Verdampfer 130 geführt wird, über die Betriebszeit des Kühlsystems 10 möglichst konstant gehalten.

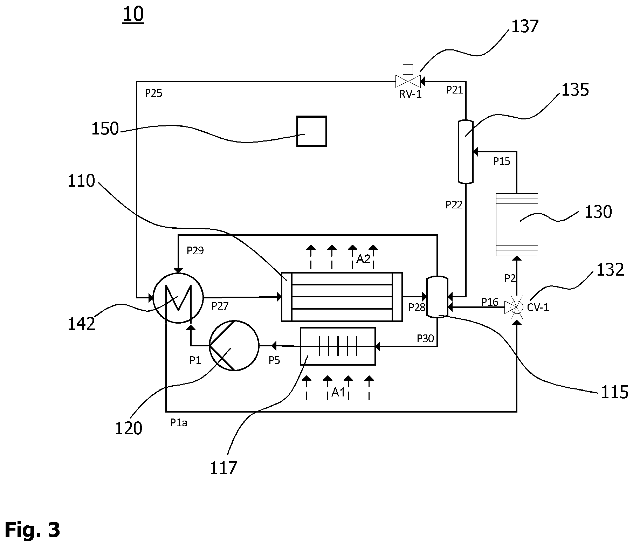

Eine weitere alternative oder zusätzliche Möglichkeit zur Erwärmung des flüssigen Kältemittels ist in Figur 3 gezeigt. Das gezeigte Kühlsystem 10 umfasst eine Vielzahl von Bauelementen, die auch in dem Kühlsystem 10 gemäß Figur 1 umfasst sind, weshalb deren Beschreibung hier nicht wiederholt wird. Hier ist ein Vorheizwärmetauscher 142 in den Zuleitungsabschnitt P1 zwischen Fördereinrichtung 120 und zweitem Regelventil 132 integriert. In dem Vorheizwärmetauscher 142 wird das flüssige Kältemittel nach Verlassen der Fördereinrichtung 120 mit dem gasförmigen Kältemittel in der ersten Ableitung P21, P25 thermisch gekoppelt. Die dadurch erfolgte Abkühlung des gasförmigen Kältemittels reduziert den Kühlungsbedarf in dem Kondensator 110.

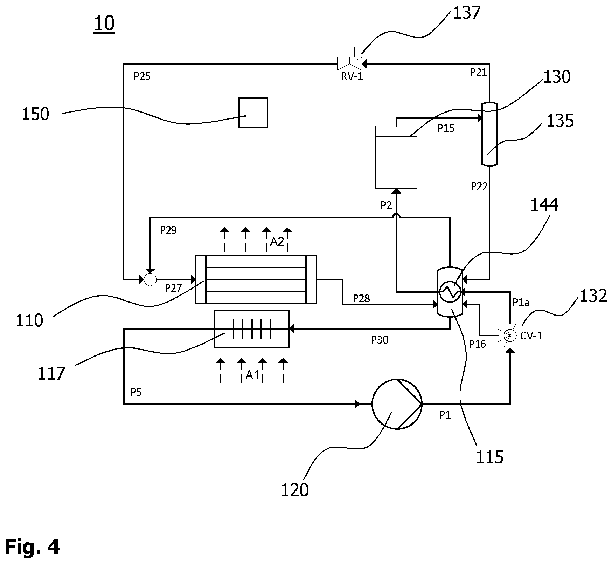

Figur 4 zeigt schließlich eine weitere alternative oder zusätzliche Möglichkeit zur Erwärmung des flüssigen Kältemittels. Das gezeigte Kühlsystem 10 umfasst eine Vielzahl von Bauelementen, die auch in dem Kühlsystem 10 gemäß Figur 1 umfasst sind, weshalb deren Beschreibung hier nicht wiederholt wird. Dabei ist ein Vorheizwärmetauscher 144 in der Zuleitung P2 integriert, der in dem zweiten Sammelbehälter 115 angeordnet ist. Dadurch kann der Wärmetauscher 144 eine thermische Kopplung des flüssigen Kältemittels in der Zuleitung P2 des Verdampfers 130 mit dem flüssigen Kältemittel in dem zweiten Sammelbehälter 115 bewirken.

## Patentansprüche

1. Kühlsystem (10) mit einem zweiphasigen Kältemittel, umfassend:
- einen Kondensator (110), der dazu eingerichtet ist, das zweiphasige Kältemittel zu kühlen und gasförmiges Kältemittel in flüssiges Kältemittel zu überführen;
- einen Verdampfer (130), der dazu eingerichtet ist, das zweiphasige Kältemittel zu erwärmen, wobei zumindest ein Teil des Kältemittels zu gasförmigem Kältemittel verdampft;
- eine Fördereinrichtung (120), die dazu eingerichtet ist, das zweiphasige Kältemittel von dem Kondensator zu dem Verdampfer zu fördern;
- eine Steuerung (150), die dazu eingerichtet ist, eine Fördermenge des zweiphasigen Kältemittels durch die Fördereinrichtung (120) zu steuern;
- einen ersten Sammelbehälter (135), der dazu eingerichtet ist, das flüssige und gasförmige Kältemittel aus dem Verdampfer (130) zu sammeln;
- eine erste Ableitung (P21), die den ersten Sammelbehälter (135) mit einem stromaufwärts des Kondensators (110) liegenden Teil des Kühlsystems (10) fluidisch verbindet und die dazu eingerichtet ist, gasförmiges Kältemittel aus dem ersten Sammelbehälter (135) abzuleiten; und
- eine zweite Ableitung (P22), die den ersten Sammelbehälter (135) mit einem stromabwärts des Kondensators (110) liegenden Teil des Kühlsystems (10) fluidisch verbindet und die dazu eingerichtet ist, flüssiges Kältemittel aus dem ersten Sammelbehälter (135) abzuleiten.

2. Kühlsystem (10) gemäß Anspruch 1, ferner umfassend:
- ein erstes Regelventil (137), das in der ersten Ableitung (P21) angeordnet ist und dazu eingerichtet ist, eine Durchflussmenge des gasförmigen Kältemittels durch die erste Ableitung (P21) zu regeln,
wobei vorzugsweise die Steuerung (150) ferner dazu eingerichtet ist, das erste Regelventil (137) so zu steuern, dass das Kältemittel in dem ersten Sammelbehälter (135) einen höheren Druck aufweist als das Kältemittel in dem stromabwärts des Kondensators (110) liegenden Teil des Kühlsystems (10).

3. Kühlsystem (10) gemäß Anspruch 1, wobei zumindest ein Abschnitt der ersten Ableitung (P21) einen festen Strömungswiderstand aufweist, der so vorgegebenen ist, dass das Kältemittel in dem ersten Sammelbehälter (135) einen höheren Druck aufweist als das Kältemittel in dem stromabwärts des Kondensators (110) liegenden Teil des Kühlsystems (10).

4. Kühlsystem (10) gemäß einem der Ansprüche 1 bis 3, ferner umfassend:
- einen zweiten Sammelbehälter (115), der dazu eingerichtet ist, das flüssige Kältemittel aus dem Kondensator (110) zu sammeln,
wobei die zweite Ableitung (P22) den ersten Sammelbehälter (135) mit dem zweiten Sammelbehälter (115) fluidisch verbindet.

5. Kühlsystem (10) gemäß einem der Ansprüche 1 bis 4, ferner umfassend:
- eine Zuleitung (P2), die die Fördereinrichtung (120) mit dem Verdampfer (130) fluidisch verbindet; und
- ein zweites Regelventil (132), das in der Zuleitung (P2) angeordnet ist und dazu eingerichtet ist, eine Durchflussmenge des Kältemittels durch die Zuleitung (P2) zu regeln,
wobei vorzugsweise die Steuerung (150) ferner dazu eingerichtet ist, das zweite Regelventil (132) so zu steuern, dass der Verdampfer (130) im Nassverdampfungsverfahren betrieben wird.

6. Kühlsystem (10) gemäß Anspruch 5, ferner umfassend:
- einen Vorheizwärmetauscher (140, 142, 144), der das Kältemittel in der Zuleitung (P2) mit dem Kältemittel stromabwärts des Verdampfers (130) thermisch koppelt.

7. Kühlsystem (10) gemäß Anspruch 6, wobei der Vorheizwärmetauscher (140) in dem ersten Sammelbehälter (135) angeordnet ist, und/oder
wobei der Vorheizwärmetauscher (142) das Kältemittel in der Zuleitung (P2) mit dem gasförmigen Kältemittel in der ersten Ableitung (P21), vorzugsweise stromaufwärts des Kondensators (110), thermisch koppelt.

8. Kühlsystem (10) gemäß Anspruch 6, wenn dieser von Anspruch 4 abhängig ist, wobei der Vorheizwärmetauscher (144) in dem zweiten Sammelbehälter (115) angeordnet ist.

9. Kühlsystem (10) gemäß einem der Ansprüche 1 bis 8, ferner umfassend:
- einen Unterkühler (117), der dazu eingerichtet ist, Kältemittel stromabwärts des Kondensators (110) und stromaufwärts der Fördereinrichtung (120) zu unterkühlen.

10. Brennstoffzellenkühlsystem (10), umfassend:
- eine Brennstoffzelle (130); und
- ein Kühlsystem gemäß einem der Ansprüche 1 bis 9,
wobei der Verdampfer (130) des Kühlsystems (10) die Brennstoffzelle ist.

11. Brennstoffzellenkühlsystem (10) gemäß Anspruch 10, wobei die Steuerung (150) des Kühlsystems (10) ferner dazu eingerichtet ist, Betriebsbedingungen der Brennstoffzelle (130) zu erfassen, einen Kühlbedarf der Brennstoffzelle (130) auf Basis der Betriebsbedingungen zu ermitteln, und das Kühlsystem (10) so zu betreiben, dass der Kühlbedarf der Brennstoffzelle (130) gewährleistet ist und der Verdampfer (130) des Kühlsystems (10) im Nassverdampfungsverfahren betrieben wird.
